(19) Europäisches Patentamt
European Patent Office
Office européen des brevets

(11) **EP 2 188 779 B1**

(12) **EUROPEAN PATENT SPECIFICATION**

(45) Date of publication and mention
of the grant of the patent:
**23.04.2014 Bulletin 2014/17**

(51) Int Cl.:
***G06T 7/00*** (2006.01)

(21) Application number: **08831511.4**

(22) Date of filing: **19.09.2008**

(86) International application number:
**PCT/KR2008/005543**

(87) International publication number:
**WO 2009/038376 (26.03.2009 Gazette 2009/13)**

(54) **EXTRACTION METHOD OF TONGUE REGION USING GRAPH-BASED APPROACH AND GEOMETRIC PROPERTIES**

EXTRAKTIONSVERFAHREN DER ZUNGENREGION MITHILFE GRAPHENBASIERTEM ANSATZ UND GEOMETRISCHEN EIGENSCHAFTEN

PROCÉDÉ D'EXTRACTION GRAPHIQUE D'UNE ZONE DE LANGUE REPOSANT SUR UNE ANALYSE GRAPHIQUE ET GÉOMÉTRIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **21.09.2007 KR 20070096688**

(43) Date of publication of application:
**26.05.2010 Bulletin 2010/21**

(73) Proprietor: **Korea Institute of Oriental Medicine Yuseoung-gu Daejeon 305-811 (KR)**

(72) Inventors:
• **KIM, Keun Ho**
  **Daejeon 305-811 (KR)**
• **RYU, Hyunhee**
  **Ansan-si**
  **Gyeonggi-do 426-743 (KR)**
• **DO, Jun-Hyeong**
  **Daejeon 305-811 (KR)**
• **KIM, Jong Yeol**
  **Daejeon 305-504 (KR)**

(74) Representative: **Office Freylinger**
  **P.O. Box 48**
  **8001 Strassen (LU)**

(56) References cited:
JP-A- 2006 055 507  JP-A- 2006 149 679
KR-A- 20040 093 882  KR-A- 20050 037 338

• **SHENGYANG YU ET AL: "Color Active Contour Models Based Tongue Segmentation in Traditional Chinese Medicine", PROCEEDINGS OF ICBBE 2007, IEEE, PISCATAWAY, NJ, USA, 1 July 2007 (2007-07-01), pages 1065-1068, XP031116244, ISBN: 978-1-4244-1120-7**
• **WANGMENG ZUO ET AL: "Combination of Polar Edge Detection and Active Contour Model for Automated Tongue Segmentation", IMAGE AND GRAPHICS, 2004. PROCEEDINGS. THIRD INTERNATIONAL CONFERENCE ON HONG KONG, CHINA 18-20 DEC. 2004, PISCATAWAY, NJ, USA,IEEE, 18 December 2004 (2004-12-18), pages 270-273, XP010779043, DOI: 10.1109/ICIG. 2004.48 ISBN: 978-0-7695-2244-9**
• **LANSUN SHEN ET AL: "Image Analysis for Tongue Characterization", CHINESE JOURNAL OF ELECTRONICS, vol. 12, no. 3, 1 July 2003 (2003-07-01), pages 317-323, XP55050148,**
• **JIA WU ET AL: "Tongue Area Extraction in Tongue Diagnosis of Traditional Chinese Medicine", ENGINEERING IN MEDICINE AND BIOLOGY SOCIETY, 2005. IEEE-EMBS 2005. 27T H ANNUAL INTERNATIONAL CONFERENCE OF THE SHANGHAI, CHINA 01-04 SEPT. 2005, PISCATAWAY, NJ, USA,IEEE, 1 September 2005 (2005-09-01), pages 4955-4957, XP010906904, DOI: 10.1109/IEMBS.2005.1615586 ISBN: 978-0-7803-8741-6**

**(Cont. next page)**

- YANG DA-SHENG; CHEN YU-HUI; ZOU FENG-MEI; ZHOU CHANG-LE: "Effective algorithm on automatic segmentation of body of tongue", APPLICATION RESEARCH OF COMPUTERS, vol. 24, no. 2, February 2007 (2007-02), pages 170-172, XP9166301, ISSN: 1001-3695
- BOYKOV ET AL: "Computing geodesics and minimal surfaces via graph cuts", PROCEEDINGS OF THE EIGHT IEEE INTERNATIONAL CONFERENCE ON COMPUTER VISION. (ICCV). NICE, FRANCE, OCT. 13 - 16, 2003; [INTERNATIONAL CONFERENCE ON COMPUTER VISION], LOS ALAMITOS, CA : IEEE COMP. SOC, US, 13 October 2003 (2003-10-13), pages 26-33vol.1, XP031213026, ISBN: 978-0-7695-1950-0
- YU D ET AL: "AN EFFICIENT ALGORITHM FOR SMOOTHIN, LINEARIZATION AND DETECTION OFSTRUCTURAL FEATURE POINTS OF BINARY IMAGE CONTOURS", PATTERN RECOGNITION, ELSEVIER, GB, vol. 30, no. 1, 1 January 1997 (1997-01-01), pages 57-69, XP000682702, ISSN: 0031-3203, DOI: 10.1016/S0031-3203(96)00055-6

**Description**

[Technical Field]

The present disclosure relates to a tongue diagnosis extraction method, and more particularly, to a method of extracting only a tongue diagnosis region from a photographed face image by analyzing color and geometrical information.

[Background Art]

Generally in Oriental medicine as well as Western medicine, a tongue is known as an organ reflecting physiological and pathological condition of the human body. Also, the tongue has various pathological functions relevant to other internal organs of the human body. Especially, it is well known that the shape of the tongue objectively reflects various physiological or pathological changes in the human body. Accordingly, various features and conditions of the tongue are used as an important indicating data in diagnosis.

Because mucous epithelium of the tongue is thin and transparent and because blood vessels and nerves are abundantly distributed in the tongue, it is possible to observe a change of the tongue clearly. Accordingly, the tongue is considered as a clear indicator reflecting various changes in the human body. The shape of the tongue acts as a window reflecting changes of the internal organs and an important identification indicator in various patterns of symptoms.

In the tongue diagnosis, a diagnostician looks at color, form, motion, body, and coating of the tongue because the diagnostician depends on visual information mainly. The tongue coating is the material coated on the tongue like moss. The diagnostician uses the tongue coating as an important diagnosis factor to determine a nature and an invasion range of ill symptom, by analyzing presence or absence of mucus by using color, humidity, thickness, form and range of the tongue coating.

More concretely, each part of the tongue may be recognized in connection with corresponding organ in the tongue diagnosis. The tip of the tongue reflects heart and lung. The middle of the tongue reflects spleen and stomach. Both sides of the tongue reflect liver and gall. Also, the root of the tongue reflects kidney. Thus, each part of the tongue reflects the pathological change and condition of the corresponding organ. Accordingly, the diagnostician firstly looks at the presence/absence, color, thickness/thinness and point/thrust of the tongue coating and skin color, and then, looks at gloss, prosperity/decadence and gloss of the tongue substance, obesity/thinness of the tongue body and two veins under the tongue in order to find the condition of each organ. A tongue region including the tongue substance and the tongue coating is called a tongue body or a tongue diagnosis region.

Thus, because the tongue is an important organ indicating the condition of the body organ, the tongue diagnosis is required to be preferentially studied in order to quantitatively embody the diagnosis of the Oriental medical doctor. However, in spite of non-invasion and convenience of the tongue diagnosis, the tongue diagnosis has not been widely applied due to a limitation of quantification and standardization. Because change in diagnosis environment such as a light source affects a diagnosis result and because the diagnostician relies on his experience and knowledge, it is difficult to obtain objective and reproducible result. Recently, with an increasing interest in a non-invasive diagnosis method, various studies have been carried out to solve the above limitation of the tongue diagnosis.

In a digital tongue diagnosis system for quantitatively distinguishing the health condition of the tongue, it is preferentially necessary to obtain a tongue region from a face image including the tongue.

In China, 1986, it was pointed out that a wrong diagnosis conclusion might be caused by influences of the light source, temperature, and psychological factor of a doctor in relation to tongue image acquisition. Accordingly, a method of uniformly illuminating and photographing the tongue under the condition of a standard light source has been studied. Then, studies involved in various methods for obtaining a higher quality image such as a method of controlling an illumination angle, a brightness and a photographer's posture, a method of controlling image acquisition environment, and a method of adjusting an iris, a shutter and an exposure of a camera have been carried out. Also, the study on a method of detecting the tongue region necessary to a diagnosis from the image has been performed. (J. Wu, Y. Zhang, J. Bai, "Tongue Area Extraction in Tongue Diagnosis of Traditional Chinese Medicine," It Proceedings of the 2005 IEEE Engineering in Medicine and Biology 27th Annual Conference, Shanghai, China, pp. 4955-4957, Sept. 2005)

Starting a manual region detection method, studies on automatic region detection algorithm have been recently progressed. Also, the various studies using the image segmentation method have been progressed (B. Pang, K. Wang, D. Zhang, F. Zhang, "On Automated Tongue Image Segmentation in Chinese Medicine," ICPR, Vol. 1, pp. 616-619, 2002.) (W. Li, C. Zhou, Z. Zhang, "The segmentation of the body of tongue based on the improved snake algorithm in traditional Chinese medicine," Proceedings of the 5th world congress on intelligent control and automation, pp. 15-19, June 2004.).

However, these methods require a user's intervention because the user should draw contours at the initial stage.

As a region segmentation method capable of replacing those methods, there are graph cut methods of obtaining edge surface minimizing energy in a broad area (Y. Boykov, V. Kolmogorov, "Computing Geodesics and Minimal Surfaces via Graph Cuts," Proceedings of the 9th ICCV'03, pp. 26-33, Oct. 2003.)(R. Zabih, V. Kolmogorov, "Spatially Coherent Clustering Using Graph Cuts," Proceedings of Computer Vision and Pattern Recognition, vol. 2, pp. 437-444, July 2004.).

For another method, there is a grab cut method expanding the graph cut into a repetitive structure, which also requires the user to draw a contour and a rectangle around an object. A grow cut method using a cellular automaton in order to label pixels for deciding background and foreground also requires the user's intervention although the user's intervention is minimized.

S. Yu et al. "Color Active Contour Models Based Tongue Segmentation in Traditional Chinese Medecine", Proc. of ICBBE 2007, pp. 1065-1068, July 2007, is further relevant prior art.

As a relevant patent besides, there is a diagnosis system of Japanese Patent Publication No. 2005-296208), which discloses a configuration of retransmitting a diagnosis result to a terminal after a computer analyzing the tongue picture taken and transmitted by the terminal. However, this configuration is lack of how to analyze the tongue image and how to understand the tongue region. That is, the above disclosure is lack of extracting the region of the tongue diagnosis from the tongue image.

Also, looking at another related art invention, Korean Patent Publication No. 2004-0059312 discloses a method of extracting an interest region from a tongue image and an apparatus and a method of monitoring health using the tongue image system. More particularly, the tongue region is segmented using a threshold value. Also, the tongue image is segmented into interest regions in accordance with the middle, the root, the sides, and the tip of the tongue by matching predetermined template images. In this case, it is impossible to accurately detect the tongue diagnosis region from various tongue shapes through only the template image.

In the digital tongue diagnosis system, it is necessary to detect only a tongue region necessary to the tongue diagnosis from the tongue image obtained from a digital camera in order to minimize the influence by different diagnosis environments. In this case, the general image segmentation method has a limitation in discriminating the tongue diagnosis region because the color and texture characteristics of the tongue image may vary in accordance with the light condition.

[Disclosure]

[Technical Problem]

Therefore, an object of the present invention is to provide a method of systematically extracting a tongue diagnosis region from an obtained tongue image to automate a tongue diagnosis, and a tongue diagnosis region extraction method using a graph-based approach and geometrical properties, which extracts the tongue diagnosis regions segmented by circumferential edges in consideration of the color and structural characteristics of the tongue.

[Technical Solution]

To achieve these and other advantages and in accordance with the purpose(s) of the present invention as embodied and broadly described herein, a tongue diagnosis region extraction method using a graph-based approach and geometrical properties in accordance with an aspect of the present invention includes: the steps of: 1) obtaining a face image having a tongue region focused by a camera; 2) correcting a size and a quality of the image; 3) determining a main segmentation region having a greatest area within a predetermined range from a center of the image after a graph-based over-segmentation of the image; 4) extracting an edge of a tongue diagnosis by detecting a part having a local minimum value of shading within a predetermined outer range from an edge of the main segmentation region; 5) extracting an edge of the tongue diagnosis by detecting a part having a greatest color difference between adjacent pixels within a predetermined outer range from the edge of the main segmentation region; and 6) smoothly connecting the edges detected in the steps 4) and 5) using geometrical structure information of a tongue.

To achieve these and other advantages and in accordance with the purpose(s) of the present invention, a tongue diagnosis region extraction method using a graph-based approach and geometrical properties in accordance with another aspect of the present invention includes: the steps of: 1) obtaining a face image having a tongue region focused by a camera; 2) correcting a size and a quality of the image; 3) determining a main segmentation region having a greatest area within a predetermined range from a center of the image after a graph-based image over-segmentation of the image; 4) extracting an edge of a tongue diagnosis region by detecting a part having a local minimum value of shading within a predetermined outer range from the main segmentation region; 5) correcting discontinuous edge surfaces at a present coordinate and a previous coordinate to be continuous when a difference between the present coordinate and the previous coordinate of the part having the local minimum value within a predetermined outer range from the main segmentation region is greater than a predetermined standard value; and 6) smoothly connecting the edges detected in the steps 4) and 5) using geometrical structure information of a tongue.

To achieve these and other advantages and in accordance with the purpose(s) of the present invention, a tongue diagnosis region extraction method using a graph-based approach and geometrical properties in accordance with another aspect of the present invention includes: the steps of: 1) obtaining a face image having a tongue region focused by a camera; 2) correcting a size and a quality of the image; 3) determining a main segmentation region having a greatest area within a predetermined range from a center of the image after a graph-based image over-segmentation of the image; 4) extracting an edge of a tongue diagnosis region by detecting a part having a local minimum value of shading within a predetermined outer range from the main segmentation region; 5) correcting, after the step 4), discontinuous edges at a present coordinate and a previous coordinate to be continuous when a difference between the present coordinate and the previous coordinate of the part having the local minimum value within a predetermined outer range from the main segmentation region is greater than a predetermined standard value; 6) obtaining a curve corresponding with the edge obtained in the step 5); 7) extracting, after the step 4), an edge of a tongue diagnosis region by detecting a part having a greatest color difference between adjacent pixels within a predetermined outer range from the main segmentation region; 8) obtaining a curve corresponding with the edge obtained in the step 7); 9) selecting the edge and the curve having the smaller difference by comparing a difference between the edge of the tongue diagnosis corrected in the step 5) and the curve obtained in the step 6) and a difference between the edge of the tongue diagnosis extracted in the step 7) and the curve obtained in the step 8); and 10) smoothly connecting the edges selected in the step 9) using geometrical structure information of a tongue.

[Advantageous Effects]

A tongue diagnosis region extraction method using a graph-based approach and geometrical properties according to the present invention has an effect of automatically classifying a tongue diagnosis region, which is difficult to discriminate from a surrounding skin or an oral skin by analyzing a digital image. Also, it is possible to easily detect the tongue diagnosis region from tongue images having various colors due to various tongue coatings.

Furthermore, the tongue diagnosis region extraction method using the graph-based approach and geometrical properties according to the present invention has an effect of objectifying and standardizing

[Description of Drawings]

FIG. 1 is a flowchart illustrating a tongue diagnosis region extraction method using a graph based approach and geometrical properties according to the first embodiment of the present invention;

FIG. 2 is a diagram illustrating an example of a digital tongue diagnosis system;

FIG. 3 is a diagram illustrating a face image obtained by a digital tongue diagnosis system;

FIG. 4 is a diagram illustrating a face image applied with an over-segmentation according to an embodiment of the present invention;

FIG. 5 is a diagram illustrating shading around the outer edge of a tongue;

FIG. 6 is a diagram of the form of a flat tongue;

FIG. 7 is a diagram illustrating a result of detecting color edges in a horizontal direction;

FIG. 8 is a diagram illustrating a horizontal edge and a vertical edge of tongue edge;

FIG. 9 is a diagram illustrating a result of detecting an edge in a vertical direction after detecting an edge in a horizontal direction;

FIG. 10 is a diagram illustrating a discontinuity surface in an edge after detecting a color edge;

FIG. 11 is a diagram illustrating geometric structure information according to an outline of a tongue body;

FIG. 12 is a diagram of a finally detected tongue diagnosis region;

FIG. 13 is a flowchart illustrating a tongue diagnosis region extraction method using a graph based approach and geometrical properties according to a second embodiment of the present invention;

FIG. 14 is a diagram illustrating a method of correcting a discontinuous edge within a predetermined range of the left and right sides of a tongue diagnosis region according to the second embodiment of the present invention;

FIG. 15 is a diagram illustrating a method of correcting a discontinuous edge within a predetermined range of the upper and lower sides of a tongue diagnosis region according to the second embodiment of the present invention;

FIG. 16 is a flowchart illustrating a tongue diagnosis region extraction method using a graph based approach and geometrical properties according to a third embodiment of the present invention; and

FIG. 17 is a diagram illustrating various forms of tongue diagnosis region.

[Best Mode]

In a tongue diagnosis region extraction method using a graph based approach and geometrical properties according to an embodiment of the present invention, first, a face image having a tongue region is obtained by a camera focused on a tongue (tongue body).

Before a region is segmented, a preprocessing correction is performed with respect to the face image.

After an over-segmentation is performed to the corrected image, a main segmentation region having the greatest area within a predetermined region is detected on the basis of the center of the image.

Shading may occur on an outer part of the tongue due to three-dimensional property of the tongue. In this case, the sides R2 of the tongue, which are an edge surface of the tongue, have a local minimum value of the shading because the sides R2 of the tongue are vertical to the illumination. A location of the local minimum value is extracted as an edge surface of the tongue body.

That is, the edge surface is extracted using a color value of the darkest part of the edge surface.

According to an embodiment of the present invention, the edge surface is extracted by selecting pixels having the smallest R value of the RGB color value. The reason why the R value is used is that the tongue has a red color generally. Accordingly, it is more efficient to use the R value than other color value.

After the process of detecting the edge using the local minimum value, a first edge of the tongue diagnosis is detected by correcting a discontinuous part to be continuous. Then, a curve corresponding with the first edge is obtained.

Also, a second edge of the tongue diagnosis is extracted by detecting a region having a greatest color difference in comparison with adjacent pixels within a predetermined range surrounding the main segmentation region. Then, a curve corresponding with the second edge is obtained.

Next, the edge and curve having a smaller difference are selected by comparing a difference between the first edge and the curve corresponding with the first edge and a difference between the second edge and the curve corresponding with the second edge.

After this, the edge is smoothened into an oval shape using geometric structure information of the tongue.

[Mode for Invention]

Hereinafter, preferred embodiments of the present invention will be in detail described with reference to the accompanying drawings.

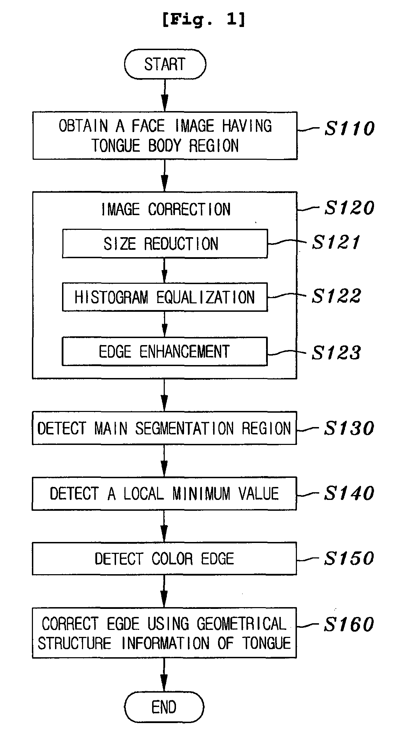

FIG. 1 is a flowchart illustrating a tongue diagnosis region extraction method using a graph based approach and geometrical properties according to a first embodiment of the present invention.

Referring to FIG. 1, in step S110, a face image having a tongue region is obtained from a camera, which is focused on the center of the tongue (tongue body) region.

A digital tongue diagnosis system including the camera may be used in order to obtain a clearer face image.

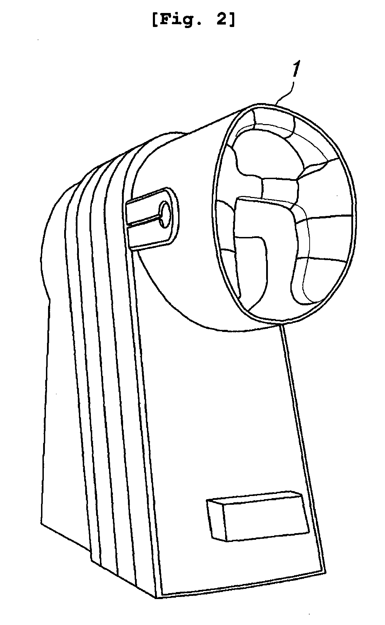

FIG. 2 is a diagram illustrating an example of a digital tongue diagnosis system.

Referring to FIG. 2, the digital tongue diagnosis system 1 may obtain a tongue image using a standardized light source and a digital camera, and obtain a clearer image through color calibration. This system is designed in consideration of human engineering so as to form a dark room when user's eyes are fixed on an ocular part. Also, the system uses a strobe light having the color temperature (5500K) property similar to the sunlight in order to standardize the light source.

A tongue region, i.e., a face image including the tongue body region is collected using the digital tongue diagnosis system 1 as configured above. The image of digital tongue diagnosis system 1 may be observed through GUI in real-time. The face image may be obtained by a CCD camera or a method of scanning a picture taken by a general camera.

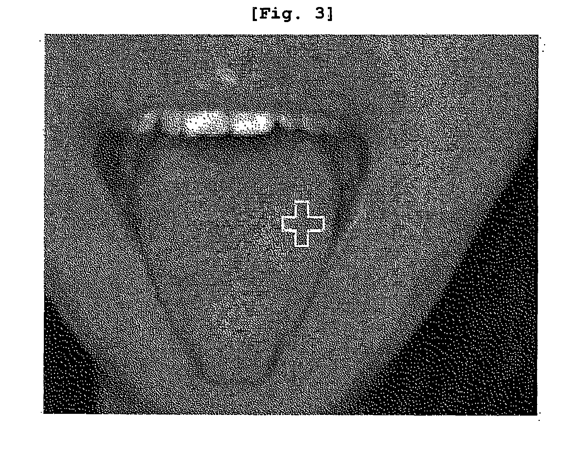

FIG. 3 is a diagram illustrating a face image obtained by a digital tongue diagnosis system.
When obtaining an image using the digital tongue diagnosis system, a predetermined tongue part may be located at the center point of the image indicated by the cross as described in FIG. 3.

According to an embodiment of the present invention, the obtained tongue image may be an RGB 24 bit BMP image with $1280 \times 960$ resolution without any limitation thereto. That is, the tongue image may include various formats or sizes.

The tongue body image is classified into five types of a non-coating image, a white coating image, a yellow coating image, a mixed coating image mixed with the white coating and the yellow coating, and a non-classified image, which is with dimly white coating.

Next, before performing the region segmentation, in step S120, a pre-processing correction is performed on the face image.

As an embodiment of the image correction, in step S121, a $533 \times 400$ image is generated through down-sampling because a big size image may require much processing time. In this embodiment, although the down-sampled image size is $533 \times 400$ for convenience, the size may be reduced to various sizes without any limitation thereto.

The brightness distribution of the images varies according to the condition of the illumination such as a strobe light. Accordingly, in step S122, histogram equalization is performed using brightness in order to normalize the brightness distribution, so that the image may have the uniform brightness property.

The histogram equalization refers not to adding data to improve the original image, but to spreading out the histogram by analyzing the form of the histogram so as to distribute the brightness over a wider region without bias to a specific region.

In step S123, edge enhancement is performed as a final step of the pre-processing in order to further emphasize the edge surface of the tongue.

The edge enhancement refers to clearing color discrimination in the edge surface in order to emphasize the edge of the tongue at the obtained face image.

In step S130, the greatest main segmentation region is detected on the basis of the center of the image after the corrected image is over-segmented.

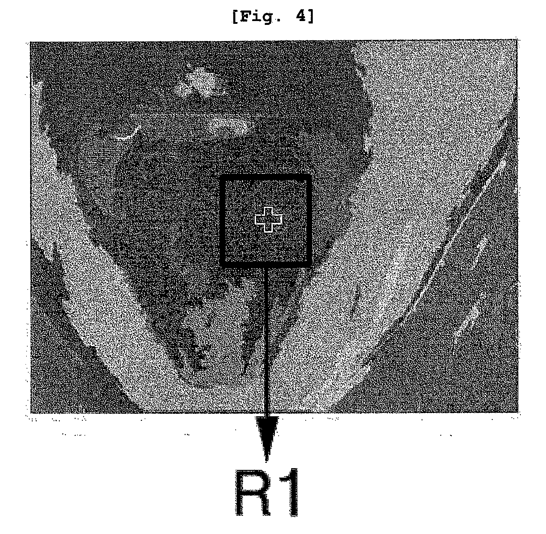

FIG. 4 is a diagram illustrating a face over-segmented according to an embodiment of the present invention. As described in FIG. 4, the image object is segmented according to the property of the surface.

First, the over-segmentation is performed to detect the main segmentation region. The over-segmentation method uses the graph based segmentation, which is based on selecting edges by each pixel compared to related art clustering methods.

A graph is expressed as G = (V, E), where V is a location corresponding to a node corresponding to each pixel, and E is an edge connected between neighboring pixels. Each E has a weight, which means dissimilarity between two pixels connected through the edge. For example, the dissimilarity includes differences of color, intensity, motion and location. Similar parts are progressively merged by comparing the dissimilarity. Given a predetermined threshold, the edge surface is generated at a place where the difference of G is above the threshold to segment the region.

By this method, most of the tongue region including the center of the tongue is merged into one. The region may be segmented due to the light reflection or spots in central part of the tongue. In this case, in order to a main tongue region having the greatest area, the segmentation region occupying main area is found by measuring distribution within a predetermined range from the center point.

As described in the following equation 1, if distribution PA of a segmentation region A in a predetermined region is greater than distribution PB of a segmentation region B, A is determined as the main segmentation region, all regions within the region A are merged into the main segmentation region A.

$$\{x \in A \mid P_A > P_B, x \in B\}$$   Equation 1

Among the regions segmented after the over-segmentation, a region having the greatest area within a predetermined range R1 from the center point of the tongue, e.g., the broadest color (purple) part is set as the main segmentation region.

In this case, when different regions are included in the main segmentation region (purple), the different regions are merged into the main segmentation region.

When a different color region besides the main segmentation region exists within the predetermined range R1, the different color region is also merged into the main segmentation region.

That is, although three or more regions within the predetermined region R1, the other regions are merged into the region of the greatest distribution.

In this case, an outer edge part of the region may not be segmented into the tongue region because the outer edge part of the tongue undergoes a color change due to a three-dimensional characteristic of the tongue.

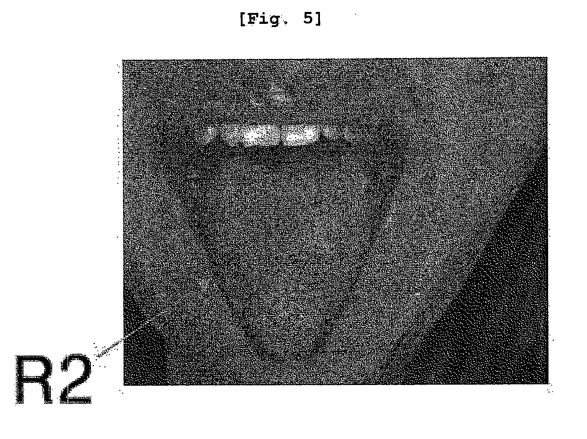

FIG. 5 is a diagram illustrating shading around the outer edge of a tongue.

Referring to FIG. 5, shading is generated in the edge surface of the outer part of the tongue, which is caused by the three-dimensional characteristic of the tongue and an illumination. In this case, the sides R2 of the tongue, which are an edge surface, have a local minimum value because the sides R2 are vertical to the illumination. In step S140, a location of this local minimum value is extracted as the edge surface of the tongue body.

That is, the edge surface is detected using the color value of the dark part of the edge surface.

According to an embodiment of the present invention, the edge surface is extracted by selecting pixels having the smallest R or G value of the RGB color value. The reason why the R or G value is used is that the tongue is generally red or the major factor of shading is green. Accordingly, it is more efficient to use the R value than other color values.

In step 150, a part having the greatest color difference from the adjacent pixels within the outer predetermined range of the main segmentation region is detected to extract the edge of the tongue diagnosis region.

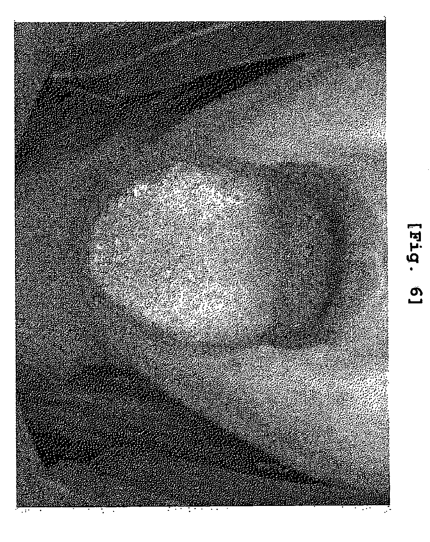

FIG. 6 is a diagram of a form of a flat tongue.

Referring to FIG. 6, shading may not generate in the edge surface on the flat tongue lacking in bulky feeling or the lower part of the tongue.

Especially, the shading may not be shown due to the rolling-up or the curling-up of the tongue. For this, the color edge detection is performed to find a part where the greatest color difference occurs within the outer predetermined range of the main segmentation region. The part, where the difference of R value between the skin and the tongue is greatest, is determined as the edge.

Contrary to the previous steps, this procedure prepares for almost no shading by detecting a part where the R value differences between the adjacent pixels are greatest within the predetermined range value.

R value can discriminate edges because the red color is mostly used in the skin and the tongue body of the human.

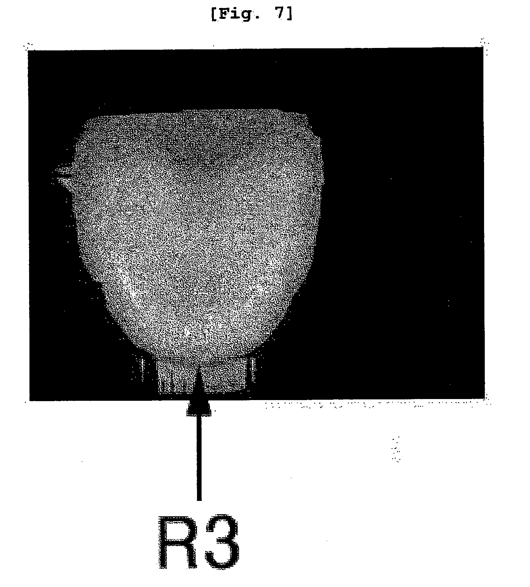

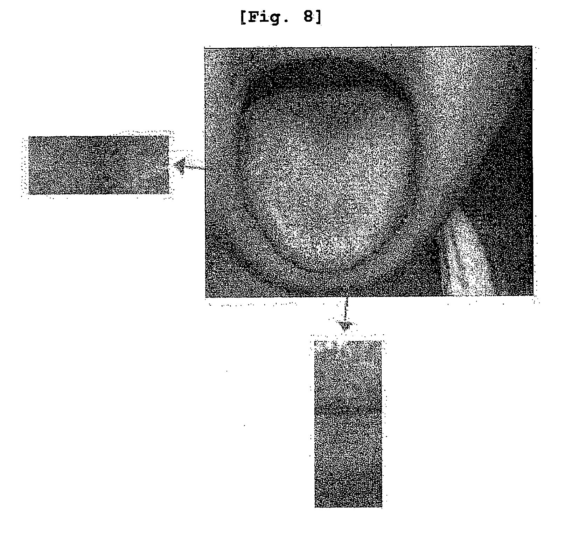

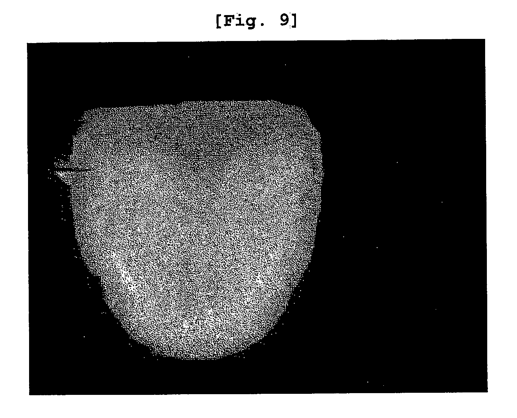

FIG. 7 is a diagram illustrating a result of detecting color edge in a horizontal direction. FIG. 8 is a diagram illustrating a horizontal edge and a vertical edge of tongue edge. FIG. 9 is a diagram illustrating a result of detecting an edge in a vertical direction after detecting an edge in a horizontal direction.

Referring to FIGS. 7 to 9, based on the R value, a location where the difference of the R value is horizontally greatest within a predetermined range is set to a side edge surface. In this case, the edge surface may not be detected at the lower part (R3) of the tongue.

Based on R value based, a location where the difference of the R value is vertically greatest within a predetermined range is set to a side edge surface. In this case, the edge surface may be detected at the lower part (R3) of the tongue.

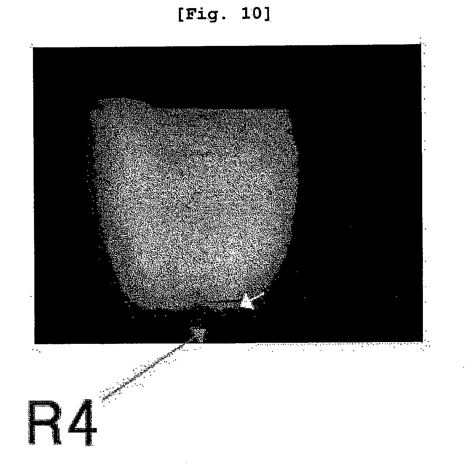

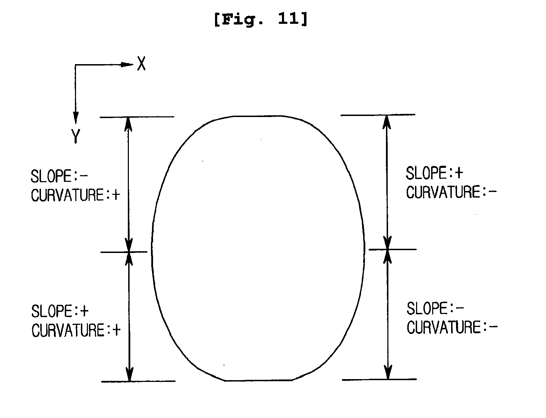

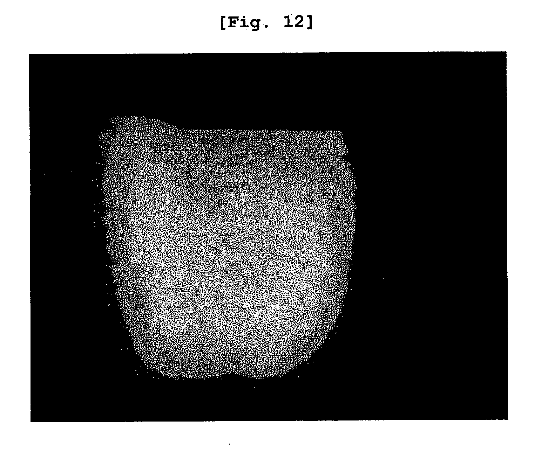

FIG. 10 is a diagram illustrating a discontinuity surface in an edge after detecting a color edge. FIG. 11 is a diagram illustrating geometric structure information according to an outline of a tongue body. FIG. 12 is a diagram of a finally detected tongue diagnosis region.

In step S160, after detecting the edge using the color value as described above, the detected edges are softly connected to each other using geometric structure information of the tongue.

That is, the edge surface of the tongue may not be softly connected to each other due to the shadow or the roughness of the skin. Also, discontinuous surface R4 may be generated after detection of the color edge. Accordingly, symmetrical information is used to softly connect these rough edge surfaces. When the difference between positions of discontinuous edge surface is above a predetermined threshold, a continuous line is obtained by using a slope of the connection line.

This method uses the regularity of the symmetrical information of the tongue structure by removing or filling pixels beyond the regularity. The tongue structure is an oval structure or a partly omitted oval as described in FIG. 11. A sign is obtained by acquiring the slope and the curvature of X direction with respect to Y direction around the detected edge. Pixels of a part departing from the sign are removed or filled in accordance with predicted locations by using the entire slope and curvature. An example of the slope and the curvature according to each quadrant are described in FIG. 11. The edge of the tongue is corrected by using the symmetrical information of this tongue.

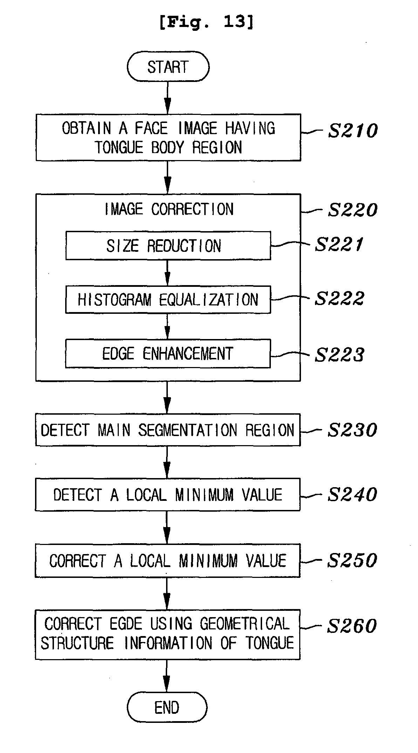

FIG. 13 is a flowchart illustrating a tongue diagnosis region extraction method using a graph based approach and geometrical properties according to a second embodiment of the present invention.

Referring to FIG. 13, a tongue diagnosis region extraction method according to a second embodiment of the present invention includes image acquisition S210, image correction S220, and main segmentation region detection S230 as described in the first embodiment.

In step S250, the second embodiment of the present invention corrects the discontinuous edge to be continuous in the process of detecting the edge by using the local minimum value rather than extracts the edge on the basis of the color after detecting the main segmentation region.

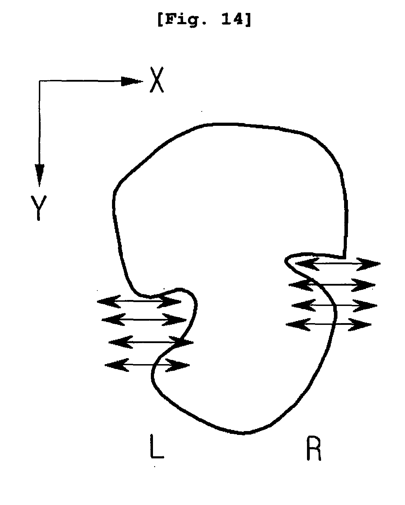

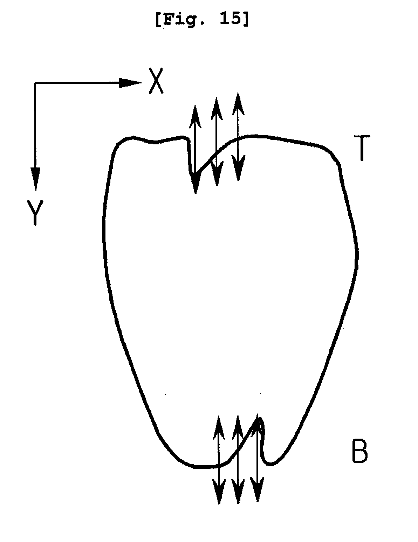

That is, when the edge is detected by using the local minimum as described in FIGS. 14 and 15, the edge may be suddenly recessed or protruded.

In this case, the edge of the tongue may be unnatural, which is necessary to correct.

FIG. 14 is a diagram illustrating a method of correcting a discontinuous edge within a predetermined range of the left and right sides of a tongue diagnosis region according to the second embodiment of the present invention. FIG. 15 is a diagram illustrating a method of correcting a discontinuous edge within a predetermined range of the upper and lower sides of a tongue diagnosis region according to the second embodiment of the present invention.

Referring to FIGS. 14 and 15, a looped curve is an edge of the tongue diagnosis region by using the local minimum value.

The local minimum value is detected at the left side L and the right side R of the main segmentation region.

In this case, the local minimum value is detected in the X-axis direction by increasing the value of the Y coordinate from the upper part to the lower part of the main segmentation region like arrows as shown in FIGS. 14 and 15.

It is determined to be discontinuous when a difference between a value of the X coordinate of the pixel having the local minimum value at the present point of time (present Y coordinate) and a value of the X coordinate of the pixel having the local minimum value at the previous point of time (previous Y coordinate) is above a predetermined standard value.

According to an embodiment of the present invention, the standard value may be set to three pixels.

In this case, the coordinate of the next pixel to progress by one pixel in the detection direction is set to the edge of the tongue region. Thus, when the edge of the tongue region at the left side L and the right side R of the main segmentation region is detected, the coordinates X of the edges of the previous point of time and the present point of time are set to the same, thereby removing the discontinuous part that changes abruptly.

The correction of the discontinuous edge surface is continuously performed until the corrected edge surface is within a predetermined range from the edge surface obtained by the local minimum value.

Next, the local minimum value is found at upper part T and the lower part B of the main segmentation region. In this case, the local minimum value is detected in the Y-axis direction by increasing the value of the Y coordinate from the left to the right side of the main segmentation region like arrows as shown in FIGS. 14 and 15.

It is determined to be discontinuous when a difference between a value of the Y coordinate of the pixel having the local minimum value at the present point of time (present X coordinate) and a value of the Y coordinate of the pixel having the local minimum value at the previous point of time (previous X coordinate) is above a predetermined standard value.

According to an embodiment of the present invention, the standard value may be set to three pixels.

In this case, the coordinate of the next pixel to progress by one pixel in the detection direction is set to the edge of the tongue region. Thus, when the edge of the tongue region at the upper part T and the lower part B of the main segmentation region is detected, the coordinates Y of the edges of the previous point of time and the present point of time are set to the same, thereby removing the discontinuous part that changes abruptly.

The correction of the discontinuous edge surface is continuously performed until the corrected edge surface is within a predetermined range from the edge surface obtained by the local minimum value.

The remaining procedures substantially identical to the first embodiment will be omitted.

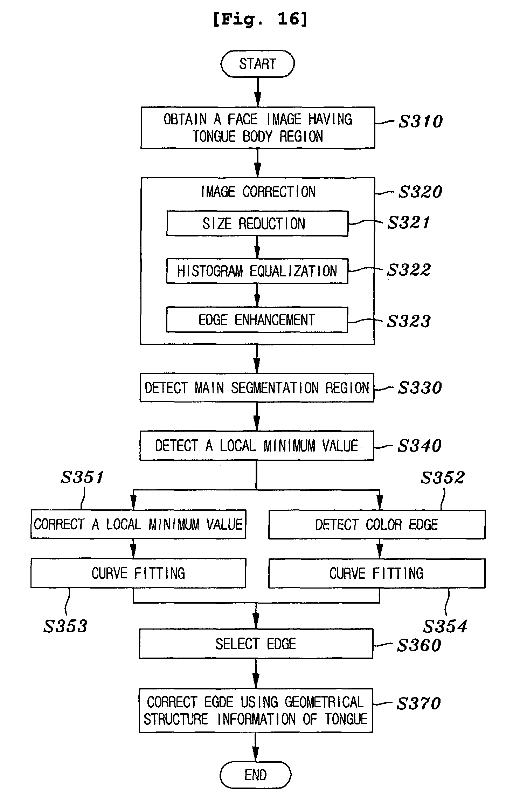

FIG. 16 is a flowchart illustrating a tongue region extraction method using a graph based approach and geometrical properties according to a third embodiment of the present invention.

Referring to FIG. 16, a tongue region extraction method according to the third embodiment of the present invention includes an image acquisition S310, an image correction 320, and main segmentation region detection S330 similarly to the second embodiment.

According to the third embodiment of the present invention, in step S351, a discontinuous part in the process is corrected to be continuous by using the local minimum value similarly to the second embodiment. In step S353, a curve corresponding to the corrected edge is obtained.

In step 352, an edge is extracted on the basis of color after detection of the main segmentation region. In step 354, a curve corresponding to the edge is obtained. That is, the extracted edge is changed into the form of curve through a curve fitting process.

In step S360, the edge and curve having a smaller difference are selected by comparing a difference between the edge of the tongue extracted in the S351 and the curve obtained in the step S353 and a difference of the edge of the tongue extracted in the S352 and the curve obtained in the S354.

Then, in step S370, the edges are softly connected to each other by using geometrical structure information of the tongue.

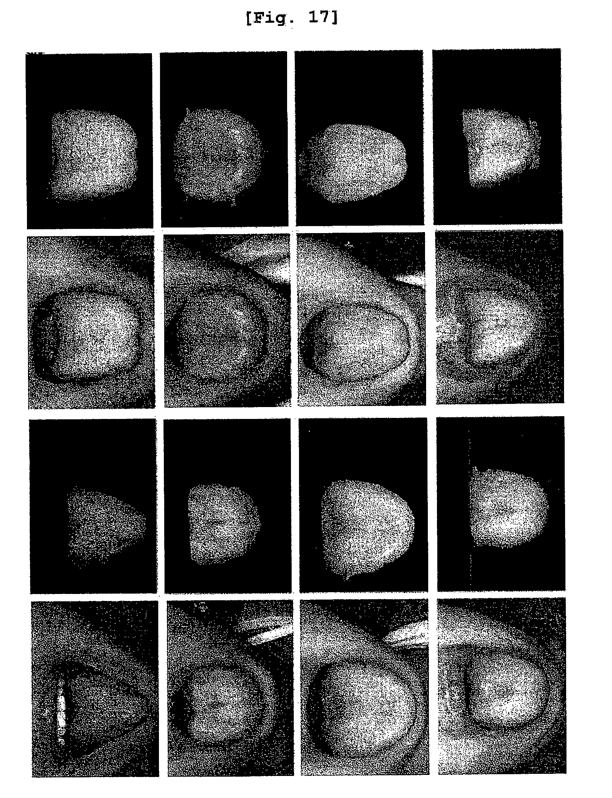

FIG. 17 is a diagram illustrating various forms of tongue region.

Referring to FIG. 17, although the tongue may have various shapes such as an oval, reverse triangle, a half oval, etc. various form, the graph based approach and the tongue region extraction method using the geometric characteristic according to the present invention can extract almost perfectly only the tongue region.

In an embodiment of the present invention, three parameters are used for a graph based region segmentation for the over-segmentation. Three parameters include a sigma, a constant k, and a minimum factor size min. The sigma has a value range of 0.9 to 2.5. The constant k is 120. The minimum factor size min is set to 100. A region size set to search for the main segmentation region is $50 \times 50$ pixels on the basis of the center point. Here, it is important that three parameters for the over-segmentation are fixed at the initial value determined once in order to minimize the intervention of the user.

The retrieval range for the local minimum detection is -40 to 40 pixels from the edge surface of the main segmentation region. The retrieval range for color edge detection is from -20 to 20 pixels from the edge surface, where the maximum color value (R value) is retrieved.

In the edge geometry estimation using the geometrical structure information of the tongue as a final step, the slope and the curvature are stored at previous four locations and a present location. By comparing the slopes and the curvatures of the previous and present locations, it is determined whether the slope and the curvature of the present location are continuous. If continuous, the slope and the curvature of the present location are given. If discontinuous, the slope and the curvature of the previous location are given.

Referring to FIG. 17, it is shown that almost tongue region and all types of the tongue body are well segmented for the diagnosis. It can be understood that the tongue regions are well segmented irrespective of the skin color or condition and gender.

In order to verify the effectiveness of the result, three Oriental doctors of the medical specialist judged the effectiveness of an original image and a segmented image by randomly selecting thirty images from images classified into non-coating, white coating, yellow coating, mixed coating, and non-classified image, the number of which is 1, 4, 1, 2 and 22, respectively. In the diagnosis of the tongue body, five points are given if the tongue segmentation region is very effective, three points are given if the tongue segmentation region is generally effective, and one point is given if the tongue segmentation region is lack of the effectiveness. Scores from one to five points are given. Three Oriental doctors gave scores above average 4 points, verifying that the segmented region has the effectiveness of the diagnosis as shown in the following Table 1.

Table 1

| Evaluator | Average score |
|---|---|
| Evaluator A | 4.37 |
| Evaluator B | 4.00 |
| Evaluator C | 4.00 |
| Average | 4.12 |

Although the tongue diagnosis region extraction method using the graph based approach and the geometrical properties according to embodiments of the present invention are described with reference to the accompanying drawings, various modifications and variations could be applied without any deviation from the scope of the present invention as defined by the appended claims.

[Industrial Applicability]

The present invention can be effectively used in the medical treatment equipment and information gathering devices for diagnosing abnormal healthy condition by automatically extracting a tongue part from a face image. Also, it can be applied to the fields of home healthcare and remote medical treatment devices.

**Claims**

1. A tongue region extraction method using a graph-based approach and geometrical properties, the method comprising the steps of:

   1) obtaining a face image having a tongue region focused by a camera;
   2) correcting a size and a quality of the image;
   3) determining a main segmentation region having a greatest area within a predetermined range from a center of the image after a graph-based over-segmentation of the image;
   4) extracting an edge of a tongue region by detecting a part having a local minimum value of shading within a predetermined outer range from an edge of the main segmentation region;
   5) extracting an edge of the tongue region by detecting a part having a greatest color difference between adjacent pixels within a predetermined outer range from the edge of the main segmentation region; and
   6) smoothly connecting the edges detected in the steps 4) and 5) using geometrical structure information of a tongue.

2. The method of claim 1,
   wherein the step 2) comprises
   down-sampling the obtained image to reduce a calculation time,
   performing a histogram equalization with respect to the obtained image to equalize a brightness distribution, and
   enhancing the edge of the obtained image to distinguish a color at the edge surface

3. The method of claim 1, wherein the step 3) comprises merging adjacent regions into the main segmentation region by a following equation,

$$\{x \in A \mid P_A > P_B, x \in B\}$$

where $P_A$ is an area of A region, $P_B$ is an area of B region, A region is the main segmentation region, and $x \in B$ is a pixel of B region.

**4.** The method of claim 1, wherein the step 3) comprises merging all regions within the main segmentation region into the main segmentation region.

**5.** The method of claim 1, wherein the step 3) comprises merging remaining regions into the main segmentation region having a greatest area when more than three regions exist within the predetermined range also.

**6.** The method of claim 1, wherein the step 4) comprises detecting a part having a smallest R or G value among RGB values.

**7.** The method of claim 1, wherein the step 5) comprises:

horizontally detecting a part having the greatest R value difference of RGB values between adjacent pixels within a predetermined outer range from the edge of the main segmentation region; and
vertically detecting a part having the greatest R value difference of RGB values between adjacent pixels within a predetermined outer range from the edge of the main segmentation region.

**8.** The method of claim 1, wherein the step 6) comprises extending a connection line by using a slope of the connection line when discontinuity of the connection line connecting the edges of the tongue is above a predetermined threshold.

**9.** The method of claim 1, wherein the step 6) comprises correcting the edge by defining geometrical structure of the tongue to an oval form and comparing signs of a slope and a curvature according to the oval form and signs of a slope and a curvature extracted from the detected edge at each quadrant.

**10.** A tongue region extraction method using a graph-based approach and geometrical properties, the method comprising the steps of:

1) obtaining a face image having a tongue region focused by a camera;
2) correcting a size and a quality of the image;
3) determining a main segmentation region having a greatest area within a predetermined range from a center of the image after a graph-based over-segmentation of the image;
4) extracting an edge of a tongue diagnosis region by detecting a part having a local minimum value of shading within a predetermined outer range from the main segmentation region;
5) correcting discontinuous edge surfaces at a present coordinate and a previous coordinate to be continuous when a difference between the present coordinate and the previous coordinate of the part having the local minimum value within a predetermined outer range from the main segmentation region is greater than a predetermined standard value; and
6) smoothly connecting the edges detected in the steps 4) and 5) using geometrical structure information of a tongue.

**11.** A tongue region extraction method using a graph-based approach and geometrical properties, the method comprising the steps of:

1) obtaining a face image having a tongue region focused by a camera;
2) correcting a size and a quality of the image;
3) determining a main segmentation region having the greatest area within a predetermined range from a center of the image after a graph-based image over-segmentation of the image;
4) extracting an edge of a tongue region by detecting a part having a local minimum value of shading within a predetermined outer range from the main segmentation region;
5) correcting, after the step 4), discontinuous edges at a present coordinate and a previous coordinate to be continuous when a difference between the present coordinate and the previous coordinate of the part having the local minimum value within a predetermined outer range from the main segmentation region is greater than a predetermined standard value;
6) obtaining a curve corresponding with the edge obtained in the step 5);
7) extracting, after the step 4), an edge of a tongue region by detecting a part having a greatest color difference between adjacent pixels within a predetermined outer range from the main segmentation region;
8) obtaining a curve corresponding with the edge obtained in the step 7);
9) selecting the edge and the curve having a smaller difference by comparing a difference between the edge of the tongue corrected in the step 5) and the curve obtained in the step 6) and a difference between the edge of the tongue region extracted in the step 7) and the curve obtained in the step 8); and
10) smoothly connecting the edges selected in the step 9) using geometrical structure information of a tongue.

12. The method of claim 10 or 11, wherein, when detecting the part having the local minimum value along a X-axis by increasing a Y coordinate from a left top or a right top to a bottom of the main segmentation region, the step 5) comprises setting a X coordinate of a pixel having the local minimum value of a present point of time to be identical to a X coordinate of a previous point of time if a difference between a value of the X coordinate of the previous point of time and a value of the X coordinate of the present point of time is greater than a predetermined standard value.

13. The method of claim 10 or 11, wherein, when detecting the part having the local minimum value along a Y-axis by increasing a X coordinate from a left top or a left bottom to a right end of the main segmentation region, the step 5) comprises setting a Y coordinate of a pixel having the local minimum value of a present point of time to be identical to a Y coordinate of a previous point of time if a difference between a value of the Y coordinate of the previous point of time and a value of the Y coordinate of the present point of time is greater than a predetermined standard value.

14. The method of claim 10, wherein, the correcting of the discontinuous edge surfaces in the step 5) is performed until the corrected edge surface is within a predetermined range from a minimum edge surface obtained in the step 4.

15. The method of claim 11, wherein the step 6) comprises:

horizontally detecting a part having the greatest R value difference of RGB values between adjacent pixels within a predetermined outer range from the edge of the main segmentation region; and
vertically detecting a part having the greatest R value difference of RGB values between adjacent pixels within a predetermined outer range from the edge of the main segmentation region.

**Patentansprüche**

1. Zungenregion-Extraktionsverfahren unter Verwendung eines graphenbasierten Ansatzes und geometrischer Eigenschaften, wobei das Verfahren folgende Schritte umfasst:

1) Erhalten eines Gesichtsbilds mit einer von einer Kamera fokussierten Zungenregion;
2) Korrigieren einer Größe und einer Qualität des Bilds;
3) Ermitteln einer Hauptsegmentierungsregion mit einer größten Fläche in einem vorgegebenen Bereich von einem Mittelpunkt des Bilds aus nach einer graphenbasierten Übersegmentierung des Bilds;
4) Extrahieren einer Kante einer Zungenregion durch Erkennen eines Teils mit einem lokalen Mindest-Schattierungswert in einem vorgegebenen äußeren Bereich von einer Kante der Hauptsegmentierungsregion;
5) Extrahieren einer Kante der Zungenregion durch Erkennen eines Teils mit einer größten Farbdifferenz zwischen benachbarten Pixeln in einem vorgegebenen äußeren Bereich von der Kante der Hauptsegmentierungsregion; und
6) glattes Verbinden der in den Schritten 4) und 5) erkannten Kanten unter Verwendung einer geometrischen Strukturinformation einer Zunge.

2. Verfahren nach Anspruch 1,
wobei der Schritt 2) Folgendes umfasst:

Herunterrechnen des erhaltenen Bilds, um eine Berechnungszeit zu verringern,
Durchführen eines Histogrammausgleichs in Bezug auf das erhaltene Bild, um eine Helligkeitsverteilung auszugleichen, und
Verbessern der Kante des erhaltenen Bilds, um eine Farbe an der Kantenfläche zu unterscheiden.

3. Verfahren nach Anspruch 1, wobei der Schritt 3) das Verschmelzen benachbarter Regionen zu der Hauptsegmentierungsregion durch folgende Gleichung umfasst:

$$\{x \in A \mid P_A > P_B, x \in B\}$$

wobei $P_A$ eine Fläche einer A-Region ist, $P_B$ eine Fläche einer B-Region ist, die A-Region die Hauptsegmentierungsregion ist und $x \in B$ ein Pixel der B-Region ist.

4. Verfahren nach Anspruch 1, wobei der Schritt 3) das Verschmelzen aller Regionen in der Hauptsegmentierungsregion zu der Hauptsegmentierungsregion umfasst.

5. Verfahren nach Anspruch 1, wobei der Schritt 3) das Verschmelzen restlicher Regionen zu der Hauptsegmentierungsregion mit einer größten Fläche umfasst, wenn mehr als drei Regionen auch in dem vorgegebenen Bereich vorhanden sind.

6. Verfahren nach Anspruch 1, wobei der Schritt 4) das Erkennen eines Teils mit einem kleinsten R- oder G-Wert unter RGB-Werten umfasst.

7. Verfahren nach Anspruch 1, wobei der Schritt 5) Folgendes umfasst:

   horizontales Erkennen eines Teils mit der größten R-Wert-Differenz von RGB-Werten zwischen benachbarten Pixeln in einem vorgegebenen äußeren Bereich von der Kante der Hauptsegmentierungsregion; und vertikales Erkennen eines Teils mit der größten R-Wert-Differenz von RGB-Werten zwischen benachbarten Pixeln in einem vorgegebenen äußeren Bereich von der Kante der Hauptsegmentierungsregion.

8. Verfahren nach Anspruch 1, wobei der Schritt 6) das Verlängern einer Verbindungslinie durch Verwendung einer Steigung der Verbindungslinie umfasst, wenn eine Diskontinuität der die Kanten der Zunge verbindenden Verbindungslinie über einem vorgegebenen Schwellwert liegt.

9. Verfahren nach Anspruch 1, wobei der Schritt 6) das Korrigieren der Kante durch Definieren einer geometrischen Struktur der Zunge zu einer ovalen Form sowie das Vergleichen von Zeichen einer Steigung und einer Krümmung gemäß der ovalen Form und von Zeichen einer Steigung und einer Krümmung, die aus der erkannten Kante an jedem Quadranten extrahiert wurden, umfasst.

10. Zungenregion-Extraktionsverfahren unter Verwendung eines graphenbasierten Ansatzes und geometrischer Eigenschaften, wobei das Verfahren folgende Schritte umfasst:

    1) Erhalten eines Gesichtsbilds mit einer von einer Kamera fokussierten Zungenregion;
    2) Korrigieren einer Größe und einer Qualität des Bilds;
    3) Ermitteln einer Hauptsegmentierungsregion mit einer größten Fläche in einem vorgegebenen Bereich von einem Mittelpunkt des Bilds aus nach einer graphenbasierten Übersegmentierung des Bilds;
    4) Extrahieren einer Kante einer Zungendiagnoseregion durch Erkennen eines Teils mit einem lokalen Mindest-Schattierungswert in einem vorgegebenen äußeren Bereich von der Hauptsegmentierungsregion;
    5) Korrigieren von diskontinuierlichen Kantenflächen an einer aktuellen Koordinate und einer vorherigen Koordinate derart, dass sie kontinuierlich sind, wenn eine Differenz zwischen der aktuellen Koordinate und der vorherigen Koordinate des Teils mit dem lokalen Mindestwert in einem vorgegebenen äußeren Bereich von der Hauptsegmentierungsregion größer als ein vorgegebener Standardwert ist; und
    6) glattes Verbinden der in den Schritten 4) und 5) erkannten Kanten unter Verwendung einer geometrischen Strukturinformation einer Zunge.

11. Zungenregion-Extraktionsverfahren unter Verwendung eines graphenbasierten Ansatzes und geometrischer Eigenschaften, wobei das Verfahren folgende Schritte umfasst:

    1) Erhalten eines Gesichtsbilds mit einer von einer Kamera fokussierten Zungenregion;
    2) Korrigieren einer Größe und einer Qualität des Bilds;
    3) Ermitteln einer Hauptsegmentierungsregion mit der größten Fläche in einem vorgegebenen Bereich von einem Mittelpunkt des Bilds aus nach einer graphenbasierten Bild-Übersegmentierung des Bilds;
    4) Extrahieren einer Kante einer Zungenregion durch Erkennen eines Teils mit einem lokalen Mindest-Schattierungswert in einem vorgegebenen äußeren Bereich von der Hauptsegmentierungsregion;
    5) Korrigieren, nach dem Schritt 4), von diskontinuierlichen Kanten an einer aktuellen Koordinate und einer vorherigen Koordinate derart, dass sie kontinuierlich sind, wenn eine Differenz zwischen der aktuellen Koordinate und der vorherigen Koordinate des Teils mit dem lokalen Mindestwert in einem vorgegebenen äußeren Bereich von der Hauptsegmentierungsregion größer als ein vorgegebener Standardwert ist;

6) Erhalten einer Kurve, die der in dem Schritt 5) erhaltenen Kante entspricht;

7) Extrahieren, nach dem Schritt 4), einer Kante einer Zungenregion durch Erkennen eines Teils mit einer größten Farbdifferenz zwischen benachbarten Pixeln in einem vorgegebenen äußeren Bereich von der Hauptsegmentierungsregion;

8) Erhalten einer Kurve, die der in dem Schritt 7) erhaltenen Kante entspricht;

9) Auswählen der Kante und der Kurve mit einer kleineren Differenz durch Vergleichen einer Differenz zwischen der in dem Schritt 5) korrigierten Kante der Zunge und der in dem Schritt 6) erhaltenen Kurve und einer Differenz zwischen der in dem Schritt 7) extrahierten Zungenregion und der in dem Schritt 8) erhaltenen Kurve; und

10) glattes Verbinden der in dem Schritt 9) ausgewählten Kanten unter Verwendung einer geometrischen Strukturinformation einer Zunge.

**12.** Verfahren nach Anspruch 10 oder 11, wobei, wenn der Teil mit dem lokalen Mindestwert entlang einer x-Achse durch Erhöhen einer y-Koordinate von einem linken oberen Ende oder einem rechten oberen Ende zu einem unteren Ende der Hauptsegmentierungsregion erkannt wird, der Schritt 5) das Einstellen einer x-Koordinate eines Pixels mit dem lokalen Mindestwert eines aktuellen Zeitpunkts derart umfasst, dass sie mit einer x-Koordinate eines vorherigen Zeitpunkts identisch ist, wenn eine Differenz zwischen einem Wert der x-Koordinate des vorherigen Zeitpunkts und einem Wert der x-Koordinate des aktuellen Zeitpunkts größer als ein vorgegebener Standardwert ist.

**13.** Verfahren nach Anspruch 10 oder 11, wobei, wenn der Teil mit dem lokalen Mindestwert entlang einer y-Achse durch Erhöhen einer x-Koordinate von einem linken oberen Ende oder einem linken unteren Ende zu einem rechten Ende der Hauptsegmentierungsregion erkannt wird, der Schritt 5) das Einstellen einer y-Koordinate eines Pixels mit dem lokalen Mindestwert eines aktuellen Zeitpunkts derart umfasst, dass sie mit einer y-Koordinate eines vorherigen Zeitpunkts identisch ist, wenn eine Differenz zwischen einem Wert der y-Koordinate des vorherigen Zeitpunkts und einem Wert der y-Koordinate des aktuellen Zeitpunkts größer als ein vorgegebener Standardwert ist.

**14.** Verfahren nach Anspruch 10, wobei das Korrigieren der diskontinuierlichen Kantenflächen in dem Schritt 5) durchgeführt wird, bis die korrigierte Kantenfläche in einem vorgegebenen Bereich von einer in dem Schritt 4) erhaltenen Mindest-Kantenfläche liegt.

**15.** Verfahren nach Anspruch 11, wobei der Schritt 6) Folgendes umfasst:

horizontales Erkennen eines Teils mit der größten R-Wert-Differenz von RGB-Werten zwischen benachbarten Pixeln in einem vorgegebenen äußeren Bereich von der Kante der Hauptsegmentierungsregion; und
vertikales Erkennen eines Teils mit der größten R-Wert-Dififerenz von RGB-Werten zwischen benachbarten Pixeln in einem vorgegebenen äußeren Bereich von der Kante der Hauptsegmentierungsregion.

## Revendications

**1.** Procédé d'extraction d'une région de langue utilisant une approche basée sur des graphes et des propriétés géométriques, le procédé comprenant les étapes suivantes :

1) l'obtention d'une image de visage comportant une région de langue focalisée par un appareil photo ;
2) la correction d'une taille et d'une qualité de l'image ;
3) la détermination d'une région de segmentation principale ayant une plus grande zone dans une plage prédéterminée à partir d'un centre de l'image après une sur-segmentation basée sur des graphes de l'image ;
4) l'extraction d'un bord d'une région de langue en détectant une partie ayant une valeur minimale locale d'ombrage dans une plage extérieure prédéterminée à partir un bord de la région de segmentation principale ;
5) l'extraction d'un bord de la région de langue en détectant une partie ayant une plus grande différence de couleurs entre des pixels adjacents dans une plage extérieure prédéterminée à partir du bord de la région de segmentation principale ; et
6) la liaison de manière fluide des bords détectés aux étapes 4) et 5) en utilisant des informations de structure géométrique d'une langue.

**2.** Procédé selon la revendication 1, dans lequel l'étape 2) comprend
le sous-échantillonnage de l'image obtenue afin de réduire un temps de calcul ;
l'exécution d'une égalisation d'histogramme relativement à l'image obtenue pour égaliser une distribution de luminosité ; et

l'amélioration du bord de l'image obtenue pour distinguer une couleur au niveau de la surface du bord.

3. Procédé selon la revendication 1, dans lequel l'étape 3) comprend la fusion de régions adjacentes dans la région de segmentation principale par l'équation suivante,

$$\{x \in A \mid P_A > P_B, x \in B\}$$

où $P_A$ est une zone de la région A, $P_B$ est une zone de la région B, la région A est la région de segmentation principale, et $x \in B$ est un pixel de la région B.

4. Procédé selon la revendication 1, dans lequel l'étape 3) comprend la fusion de toutes les régions au sein de la région de segmentation principale dans la région de segmentation principale.

5. Procédé selon la revendication 1, dans lequel l'étape 3) comprend la fusion des régions restantes dans la région de segmentation principale ayant une plus grande zone lorsque plus de trois régions existent au sein de la plage prédéterminée également.

6. Procédé selon la revendication 1, dans lequel l'étape 4) comprend la détection d'une partie ayant une plus petite valeur de R ou G parmi les valeurs RGB.

7. Procédé selon la revendication 1, dans lequel l'étape 5) comprend :

la détection horizontalement d'une partie ayant la plus grande différence de valeur de R des valeurs RGB entre des pixels adjacents dans une plage extérieure prédéterminée à partir du bord de la région de segmentation principale ; et
la détection verticalement d'une partie ayant la plus grande différence de valeur de R des valeurs RGB entre des pixels adjacents dans une plage extérieure prédéterminée à partir du bord de la région de segmentation principale.

8. Procédé selon la revendication 1, dans lequel l'étape 6) comprend l'extension d'une ligne de liaison en utilisant une pente de la ligne de liaison lorsque la discontinuité de la ligne de liaison reliant les bords de la langue est supérieure à un seuil prédéterminé.

9. Procédé selon la revendication 1, dans lequel l'étape 6) comprend la correction du bord en définissant la structure géométrique de la langue en une forme ovale et en comparant des signes d'une pente et d'une courbure en fonction de la forme ovale et des signes d'une pente et d'une courbure extraits du bord détecté à chaque quadrant.

10. Procédé d'extraction d'une région de langue utilisant une approche basée sur des graphes et des propriétés géométriques, le procédé comprenant les étapes suivantes :

1) l'obtention d'une image de visage comportant une région de langue focalisée par un appareil photo ;
2) la correction d'une taille et d'une qualité de l'image ;
3) la détermination d'une région de segmentation principale ayant une plus grande zone dans une plage prédéterminée à partir d'un centre de l'image après une sur-segmentation basée sur des graphes de l'image ;
4) l'extraction d'un bord d'une région de diagnostic de langue en détectant une partie ayant une valeur minimale locale d'ombrage dans une plage extérieure prédéterminée à partir de la région de segmentation principale ;
5) la correction de surfaces de bords discontinus au niveau d'une coordonnée actuelle et d'une coordonnée précédente afin qu'ils soient continus lorsqu'une différence entre la coordonnée actuelle et la coordonnée précédente de la partie ayant la valeur minimale locale dans une plage extérieure prédéterminée à partir de la région de segmentation principale est supérieure à une valeur standard prédéterminée ; et
6) la liaison de manière fluide des bords détectés aux étapes 4) et 5) en utilisant des informations de structure géométrique d'une langue.

11. Procédé d'extraction d'une région de langue utilisant une approche basée sur des graphes et des propriétés géométriques, le procédé comprenant les étapes consistant à :

1) l'obtention d'une image de visage comportant une région de langue focalisée par un appareil photo ;

2) la correction d'une taille et d'une qualité de l'image ;

3) la détermination d'une région de segmentation principale ayant une plus grande zone dans une plage prédéterminée à partir d'un centre de l'image après une sur-segmentation basée sur des graphes de l'image ;

4) l'extraction d'un bord d'une région de langue en détectant une partie ayant une valeur minimale locale d'ombrage dans une plage extérieure prédéterminée à partir de la région de segmentation principale ;

5) la correction, après l'étape 4), de bords discontinus au niveau d'une coordonnée actuelle et d'une coordonnée précédente afin qu'ils soient continus lorsqu'une différence entre la coordonnée actuelle et la coordonnée précédente de la partie ayant la valeur minimale locale dans une plage extérieure prédéterminée à partir de la région de segmentation principale est supérieure à une valeur standard prédéterminée ;

6) l'obtention d'une courbe correspondant au bord obtenu à l'étape 5) ;

7) l'extraction, après l'étape 4), d'un bord d'une région de langue en détectant une partie ayant une plus grande différence de couleurs entre des pixels adjacents dans une plage extérieure prédéterminée à partir de la région de segmentation principale ;

8) l'obtention d'une courbe correspondant au bord obtenu à l'étape 7) ;

9) la sélection du bord et de la courbe ayant une plus petite différence en comparant une différence entre le bord de la langue corrigé à l'étape 5) et la courbe obtenue à l'étape 6) et une différence entre le bord de la région de langue extrait à l'étape 7) et la courbe obtenue à l'étape 8) ; et

10) la liaison de manière fluide des bords sélectionnés à l'étape 9) en utilisant des informations de structure géométrique d'une langue.

**12.** Procédé selon la revendication 10 ou 11, dans lequel, lors de la détection de la partie ayant la valeur minimale locale le long d'un axe X en augmentant une coordonnée Y à partir d'une partie supérieure gauche ou d'une partie supérieure droite vers une partie inférieure de la région de segmentation principale, l'étape 5) comprend la définition d'une coordonnée X d'un pixel ayant la valeur minimale locale d'un point de temps actuel pour qu'elle soit identique à une coordonnée X d'un point de temps précédent, si une différence entre une valeur de la coordonnée X du point de temps précédent et une valeur de la coordonnée X du point de temps actuel est supérieure à une valeur standard prédéterminée.

**13.** Procédé selon la revendication 10 ou 11, dans lequel, lors de la détection de la partie ayant la valeur minimale locale le long d'un axe Y en augmentant une coordonnée X à partir d'une partie supérieure gauche ou d'une partie inférieure gauche vers une extrémité droite de la région de segmentation principale, l'étape 5) comprend la définition d'une coordonnée Y d'un pixel ayant la valeur minimale locale d'un point de temps actuel pour qu'elle soit identique à une cordonnée Y d'un point de temps précédent, si une différence entre une valeur de la coordonnée Y du point de temps précédent et une valeur de la coordonnée Y du point de temps actuel est supérieure à une valeur standard prédéterminée.

**14.** Procédé selon la revendication 10, dans lequel, la correction des surfaces des bords discontinus à l'étape 5) est effectuée jusqu'à ce que la surface du bord corrigé se situe dans une plage prédéterminée à partir d'une surface de bord minimum obtenue à l'étape 4.

**15.** Procédé selon la revendication 11, dans lequel l'étape 6) comprend :

la détection horizontalement d'une partie ayant la plus grande différence de valeur de R des valeurs RGB entre des pixels adjacents dans une plage extérieure prédéterminée à partir du bord de la région de segmentation principale ; et

la détection verticalement d'une partie ayant la plus grande différence de valeur de R des valeurs RGB entre des pixels adjacents dans une plage extérieure prédéterminée à partir du bord de la région de segmentation principale.

**[Fig. 1]**

```
        ┌─────────┐
        │  START  │
        └────┬────┘
             │
             ▼
┌─────────────────────────────┐
│ OBTAIN A FACE IMAGE HAVING  │──  S110
│    TONGUE BODY REGION       │
└──────────────┬──────────────┘
               │
               ▼
┌─────────────────────────────┐
│      IMAGE CORRECTION       │──  S120
│  ┌───────────────────────┐  │
│  │    SIZE REDUCTION     │──  S121
│  └───────────┬───────────┘  │
│              ▼              │
│  ┌───────────────────────┐  │
│  │ HISTOGRAM EQUALIZATION│──  S122
│  └───────────┬───────────┘  │
│              ▼              │
│  ┌───────────────────────┐  │
│  │   EDGE ENHANCEMENT    │──  S123
│  └───────────────────────┘  │
└──────────────┬──────────────┘
               │
               ▼
┌─────────────────────────────┐
│ DETECT MAIN SEGMENTATION REGION │──  S130
└──────────────┬──────────────┘
               │
               ▼
┌─────────────────────────────┐
│  DETECT A LOCAL MINIMUM VALUE   │──  S140
└──────────────┬──────────────┘
               │
               ▼
┌─────────────────────────────┐
│      DETECT COLOR EDGE      │──  S150
└──────────────┬──────────────┘
               │
               ▼
┌─────────────────────────────┐
│ CORRECT EGDE USING GEOMETRICAL  │──  S160
│ STRUCTURE INFORMATION OF TONGUE │
└──────────────┬──────────────┘
               │
               ▼
        ┌─────────┐
        │   END   │
        └─────────┘
```

[Fig. 2]

[Fig. 3]

[Fig. 4]

R1

[Fig. 5]

R2

[Fig. 6]

[Fig. 7]

R3

[Fig. 8]

[Fig. 9]

[Fig. 10]

R4

EP 2 188 779 B1

[Fig. 11]

SLOPE:−
CURVATURE:+

SLOPE:+
CURVATURE:−

SLOPE:+
CURVATURE:+

SLOPE:−
CURVATURE:−

27

[Fig. 12]

[Fig. 13]

START

OBTAIN A FACE IMAGE HAVING
TONGUE BODY REGION  — S210

IMAGE CORRECTION  — S220

SIZE REDUCTION  — S221

HISTOGRAM EQUALIZATION  — S222

EDGE ENHANCEMENT  — S223

DETECT MAIN SEGMENTATION REGION  — S230

DETECT A LOCAL MINIMUM VALUE  — S240

CORRECT A LOCAL MINIMUM VALUE  — S250

CORRECT EGDE USING GEOMETRICAL
STRUCTURE INFORMATION OF TONGUE  — S260

END

[Fig. 14]

[Fig. 15]

[Fig. 16]

START

OBTAIN A FACE IMAGE HAVING TONGUE BODY REGION — S310

IMAGE CORRECTION — S320

SIZE REDUCTION — S321

HISTOGRAM EQUALIZATION — S322

EDGE ENHANCEMENT — S323

DETECT MAIN SEGMENTATION REGION — S330

DETECT A LOCAL MINIMUM VALUE — S340

S351
CORRECT A LOCAL MINIMUM VALUE

S352
DETECT COLOR EDGE

CURVE FITTING

CURVE FITTING

S353

S354

SELECT EDGE — S360

CORRECT EGDE USING GEOMETRICAL STRUCTURE INFORMATION OF TONGUE — S370

END

[Fig. 17]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005296208 A
- KR 20040059312

### Non-patent literature cited in the description

- **J. WU ; Y. ZHANG ; J. BAI.** Tongue Area Extraction in Tongue Diagnosis of Traditional Chinese Medicine. *Proceedings of the 2005 IEEE Engineering in Medicine and Biology 27th Annual Conference,* September 2005, 4955-4957
- **B. PANG ; K. WANG ; D. ZHANG ; F. ZHANG.** On Automated Tongue Image Segmentation in Chinese Medicine. *ICPR,* 2002, vol. 1, 616-619
- **W. LI ; C. ZHOU ; Z. ZHANG.** The segmentation of the body of tongue based on the improved snake algorithm in traditional Chinese medicine. *Proceedings of the 5th world congress on intelligent control and automation,* June 2004, 15-19
- **Y. BOYKOV ; V. KOLMOGOROV.** Computing Geodesics and Minimal Surfaces via Graph Cuts. *Proceedings of the 9th ICCV'03,* October 2003, 26-33
- **R. ZABIH ; V. KOLMOGOROV.** Spatially Coherent Clustering Using Graph Cuts. *Proceedings of Computer Vision and Pattern Recognition,* July 2004, vol. 2, 437-444
- **S. YU et al.** Color Active Contour Models Based Tongue Segmentation in Traditional Chinese Medecine. *Proc. of ICBBE,* July 2007, 1065-1068